# EUROPÄISCHE PATENTANMELDUNG

(11) **EP 1 775 552 A2**
(43) Veröffentlichungstag der Anmeldung: **18.04.2007**
(21) Anmeldenummer: 06122137.0
(22) Anmeldetag: 11.10.2006
(51) Int. Cl.: G01C 21/26

(54) **Elektronischer Horizont für Fahrerassistenzsysteme**

(30) Priorität: 14.10.2005 DE 102005049133
(71) Anmelder: ROBERT BOSCH GMBH, 70442 Stuttgart (DE)
(72) Erfinder: Schweizer, Philippe, 1110, Morges (CH)

(57) **Zusammenfassung**

Es wird ein Verfahren zum Bereitstellen eines elektronischen Horizonts für Fahrerassistenzsysteme eines Kraftfahrzeuges offenbart, bei dem die aktuelle Position des Kraftfahrzeuges bestimmt und eine Karteninformation einer digitalisierten Karte eines Straßennetzes verwendet wird, um Daten für den elektronischen Horizont anhand der Karteninformation in der Umgebung der aktuellen Position des Kraftfahrzeuges zu erzeugen, die an die Fahrerassistenzsysteme weitergeleitet werden. Um einen flexiblen elektronischen Horizont bereitzustellen, ist erfindungsgemäß vorgesehen, dass die Daten unterteilt in mehrere Dateneinheiten mit unterschiedlichem Informationsumfang erzeugt werden. Ferner wird eine Vorrichtung zum Erzeugen eines elektronischen Horizonts offenbart.

## Beschreibung

Die vorliegende Erfindung betrifft ein Verfahren zum Bereitstellen eines elektronischen Horizonts für Fahrerassistenzsysteme eines Kraftfahrzeuges, bei dem die aktuelle Position des Kraftfahrzeuges bestimmt und eine Karteninformation einer digitalisierten Karte eines Straßennetzes versendet wird, um Daten für den elektronischen Horizont anhand der Karteninformation in der Umgebung der aktuellen Position des Kraftfahrzeuges zu erzeugen, die an die Fahrerassistenzsysteme weitergeleitet werden. Die Erfindung betrifft ferner eine Vorrichtung zum Erzeugen eines derartigen elektronischen Horizonts.

Heutzutage sind viele Kraftfahrzeuge mit einem Navigationssystem ausgerüstet. Das Navigationssystem greift üblicherweise auf einen Positionssensor und eine digitalisierte Karte eines Straßennetzes zu, um eine Route von der aktuellen Position zu einem vorgegebenen Ziel zu berechnen. Anschließend wird die berechnete Route dem Fahrer des Kraftfahrzeuges in geeigneter Weise mitgeteilt, um ihn entlang dieser Route zu dem Ziel zu führen.

Weiterhin sind Kraftfahrzeuge üblicherweise mit einer Vielzahl von Sensoren ausgestattet, deren erfasste Signale einem oder mehreren Fahrerassistenzsystemen zugeführt werden, die den Fahrer bei der Führung und Steuerung des Kraftfahrzeuges unterstützen und entlasten. Diese lassen sich in Sicherheits- und Komfortsysteme unterteilen. Die Fahrerassistenzsysteme können aktiv in die Fahrzeugsteuerung eingreifen, um in kritischen Fahrsituationen Unfälle im besten Fall ganz zu vermeiden oder aber zum mindest die Unfallfolgen für die Betroffenen so gering wie möglich zu halten.

Die Sensoren der Fahrerassistenzsysteme erfassen aber lediglich ein Ereignis, das bereits eingetreten ist. Um mögliche zukünftige Ereignisse vorausahnen zu können, kann deshalb aus der Position des Kraftfahrzeuges und der für das Navigationssystem vorhandenen Karteninformation ein so genannter "elektronischer Horizont" gebildet werden. Der elektronische Horizont enthält aus der digitalisierten Karte entnommene Information über die Straßen in der Umgebung des Kraftfahrzeuges. Somit kann den einzelnen Fahrerassistenzsystemen eine Information über mögliche, zukünftige Einflüsse aus der Fahrzeugumgebung zur Verfügung gestellt werden.

Beispielsweise kann bei Kenntnis des Radius einer Kurve und dem Abstand dazu eine maximale Geschwindigkeit ermittelt werden, mit der eine sichere Weiterfahrt und Durchfahrt der Kurve möglich ist. Wenn die aktuelle Fahrzeuggeschwindigkeit höher als die errechnete maximale Geschwindigkeit ist, kann entweder der Fahrer einen optischen und/oder akustischen Warnhinweis erhalten oder ein geeignetes Fahrerassistenzsystem kann automatisch eine Reduzierung der Geschwindigkeit bewirken.

Die verschiedenen Fahrerassistenzsysteme benötigen für ihre jeweilige, vorbestimmte Funktion unterschiedliche Informationen und Daten über die Straßen der Fahrzeugumgebung.

Vor diesem Hintergrund ist es die Aufgabe der vorliegenden Erfindung, einen elektronischen Horizont für Fahrerassistenzsysteme zu verbessern und insbesondere flexibler zu gestalten.

Dieser Aufgabe wird durch ein Verfahren mit den Merkmalen gemäß Anspruch 1 sowie durch eine Vorrichtung mit den Merkmalen gemäß Anspruch 5 gelöst. Bei einem Verfahren der eingangs beschriebenen Art ist erfindungsgemäß vorgesehen, dass die Daten unterteilt in mehrere Dateneinheiten mit unterschiedlichem Informationsumfang erzeugt werden. Wesentliche Idee dabei ist, dass dadurch der elektronische Horizont nicht in nur einer einzigen Version erstellt wird, sondern vielmehr mehrere elektronische Horizonte mit voneinander abweichenden Informationsqualitäten und Detailtiefen erzeugt werden.

Damit jedes der Fahrerassistenzsysteme alle erforderlichen Informationen erhält, ohne durch ein zu viel unbenötigter Details belastet zu werden, wertet jedes der Fahrerassistenzsysteme nur die Dateneinheiten aus, deren Informationsumfang für die Funktion des Fahrerassistenten erforderlich ist.

Bevorzugt werden die Dateneinheiten über einen Datenbus an die Fahrerassistenzsysteme weitergeleitet. Das Bussystem kann beispielsweise ein CAN-Datenbus (Controller Area Network) sein, das sich in der Kraftfahrzeug-Technologie als Standard etabliert hat.

In vorteilhafter Weise können die Daten für den elektronischen Horizont zusätzlich von zumindest einem weiteren Sensor erfasste Information enthalten. Hierdurch kann der elektronische Horizont noch flexibler auf die spezifischen Anforderungen unterschiedlicher Fahrerassistenzsysteme angepasst werden.

Nachfolgend wird ein Ausführungsbeispiel der vorliegenden Erfindung anhand einer detaillierten Beschreibung unter Bezug auf die beigefügte Zeichnung näher erläutert, diese zeigt in:

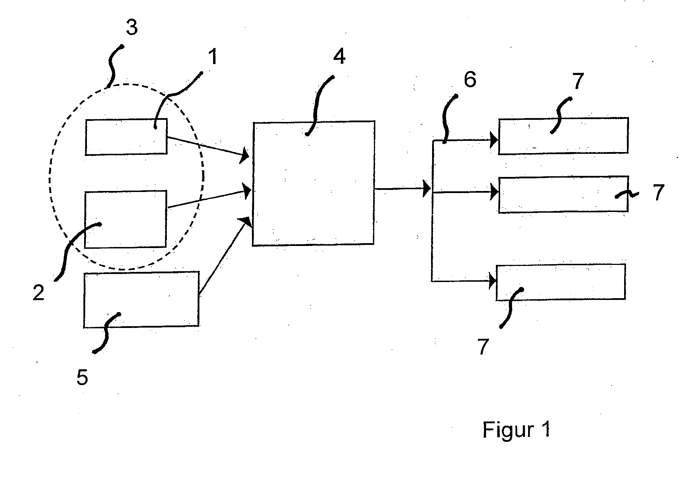

Figur 1 - eine schematische Skizze einer Vorrichtung zum Erzeugen eines erfindungsgemäßen elektronischen Horizonts.

Die in der Figur 1 dargestellte Vorrichtung weist einen Positionssensor 1 zur Bestimmung der aktuellen Position eines Kraftfahrzeuges (nicht dargestellt) auf. Der Positionssensor 1 kann ein GPS (Global Positioning System) oder irgendein anderes, geeignetes satellitengestütztes Ortungssystem sein. Ferner ist ein Datenspeicher 2 vorgesehen, auf dem eine Karteninformation einer digitalisierten Karte eines Straßennetzes abgespeichert ist. Der Positionssensor 1 und der Datenspeicher 2 können einem Navigationssystem zugeordnet sein, was in dieser Figur durch die gestrichelte Linie 3 angedeutet ist.

Der von dem Positionssensor 1 erfasste, aktuelle Standort des Kraftfahrzeuges wird an eine Datenverarbeitungseinheit 4 als Positionssignal weitergeleitet. Die Datenverarbeitungseinheit 4 empfängt weiterhin Signale von dem Datenspeicher 2. Diese Signalweiterleitung an die Datenverarbeitungseinheit 4 ist in der Figur durch Pfeile angedeutet. Zusätzlich zu den vorstehend bezeichneten Signalen kann die Datenverarbeitungseinheit 4 noch von weiteren an dem Fahrzeug angeordneten Sensoren 5 entsprechende Sensorsignale empfangen.

Aus der Gesamtheit aller empfangenen Signale erzeugt die Datenverarbeitungseinheit 4 die Daten, die den elektronischen Horizont darstellen. Diese Daten werden über ein Bussystem 6, angedeutet durch die Pfeilstruktur in der Figur 1, an eine Vielzahl von verschiedenen Fahrerassistenzsysteme 7 weitergeleitet. Die Fahrerassistenzsysteme 7 empfangen die Daten und speichern jeweils eine lokale Kopie des elektronischen Horizonts ab, um diese anschließend für Ihre jeweilige Funktion auszuwerten zu können.

Der von der Datenverarbeitungseinheit 4 erzeugte elektronische Horizont ist erfindungsgemäß auf mehrere Dateneinheiten mit unterschiedlichem Informationsumfang aufgeteilt. Beispielsweise kann eine der Dateneinheiten lediglich Informationen über die gerade befahrende Straße enthalten, wodurch der Umfang und die Komplexität dieser in der Dateneinheit enthaltenen Information weitgehend reduziert sind.

In der nächsten Stufe kann eine weitere Dateneinheit auch Informationen zu den Straßen enthalten, die bei einer Weiterfahrt von der aktuellen Straße aus erreicht werden können. Schließlich kann eine dritte Dateneinheit eine komplette Umgebungsinformation bereitstellen, also auch über Straßen, die bereits passiert wurden. Die unterschiedlichen Fahrerassistenzsysteme 7 werten zur Ausübung ihrer Funktionalität jeweils nur diejenigen der Dateneinheiten aus, die jeweils die für das Fahrerassistenzsystem 7 erforderlichen Informationen enthalten.

Der abgespeicherte elektronische Horizont wird in bestimmten Zeitabständen an die sich verändernde Fahrzeugumgebung angepasst. Hierbei kann vorgesehen sein, dass die Position bzw. der Standort des Kraftfahrzeuges häufiger aktualisiert wird als der jeweilige elektronische Horizont als Ganzes. Dadurch kann ein Fahrerassistenzsystem zwischen den Aktualisierungen des elektronischen Horizonts zumindest auf eine genauere Ortsauflösung der Fahrzeugposition innerhalb des elektronischen Horizonts zugreifen.

Bei der Aufteilung des Informationsumfangs auf die unterschiedlichen Dateneinheiten können die qualitativ höherwertigen Dateneinheiten auch die vollständige Information der qualitativ niedrigeren Dateneinheiten enthalten. Alternativ kann vorgesehen sein, dass die höherwertigen Dateneinheiten nur jeweils die zusätzliche, höherwertige Information enthalten, wodurch eine Redundanz vermieden und die Datenmenge der zu übertragenen Daten vermindert wird.

Dies führt dann dazu, dass ein Teil der Fahrerassistenzsysteme 7 nur bestimmte Dateneinheiten auswertet, während ein anderer Teil der Fahrerassistenzsysteme 7 alle Dateneinheiten auswertet, um einen elektronischen Horizont mit einem größtmöglichen Informationsumfang abzuspeichern.

Um zusätzlich die Datenmenge der zu sendenden Daten für den elektronischen Horizont zu reduzieren, besteht die Möglichkeit, dass die verschiedenen, erzeugten Dateneinheiten, die über das Bussystem 6 an die Fahrerassistenzsysteme 7 weitergeleitet werden, nur Veränderungen des Informationsumfangs gegenüber der zuletzt gesendeten entsprechenden Dateneinheit aufweisen. Auf diese Weise kann jedes der Fahrerassistenzsysteme 7 anhand der entsprechenden Dateneinheiten die lokale Kopie des elektronischen Horizonts angleichen bzw. updaten.

Eine vorstehend erwähnte Veränderung kann beispielsweise sein, dass aufgrund des wechselnden Standorts durch die Fortbewegung des Kraftfahrzeuges eine oder mehrere Straßen neu in die Fahrzeugumgebung gelangen. Ferner können Straßen aus der zu betrachtenden Fahrzeugumgebung wegfallen, so dass die entsprechenden Informationen für den elektronischen Horizont nicht mehr länger erforderlich sind.

## Patentansprüche

1. Verfahren zum Bereitstellen eines elektronischen Horizonts für Fahrerassistenzsysteme eines Kraftfahrzeuges, bei dem die aktuelle Position des Kraftfahrzeuges bestimmt und eine Karteninformation einer digitalisierten Karte eines Straßennetzes verwendet wird, um Daten für den elektronischen Horizont anhand der Karteninformation in der Umgebung der aktuellen Position des Kraftfahrzeuges zu erzeugen, die an die Fahrerassistenzsysteme weitergeleitet werden, **dadurch gekennzeichnet, dass** die Daten unterteilt in mehrere Dateneinheiten mit unterschiedlichem Informationsumfang erzeugt werden.

2. Verfahren nach Anspruch 1, **dadurch gekennzeichnet, dass** jedes der Fahrerassistenzsysteme nur die Dateneinheiten auswertet, deren Informationsumfang für die Funktion des Fahrerassistenzsystems erforderlich ist.

3. Verfahren nach Anspruch 1 oder 2, **dadurch gekennzeichnet, dass** die Dateneinheiten über einen Datenbus an die Fahrerassistenzsysteme weitergeleitet werden.

4. Verfahren nach einem der vorstehenden Ansprüche, **dadurch gekennzeichnet, dass** die erzeugten Daten zusätzlich von zumindest einem weiteren Sensor erfasste Information enthalten.

5. Vorrichtung zum Erzeugen eines elektronischen Horizonts für Fahrerassistenzsysteme (7) eines Kraftfahrzeuges mit einem Positionssensor (1) zur Bestimmung der aktuellen Position des Kraftfahrzeuges, einen Datenspeicher (2), in dem Karteninformation einer digitalisierten Karte eines Straßennetzes gespeichert ist, und einer Datenverarbeitungseinheit (4) zum Erzeugen von Daten anhand der Karteninformation in der Umgebung der aktuellen Position des Kraftfahrzeuges und zum Weiterleiten der Daten an die Fahrerassistenzsysteme (7), **dadurch gekennzeichnet, dass** die Datenverarbeitungseinheit (4) ausgebildet ist, die Daten unterteilt in mehrere Dateneinheiten mit unterschiedlichem Informationsumfang zu erzeugen.

6. Vorrichtung nach Anspruch 5, **dadurch gekennzeichnet, dass** die Datenverarbeitungseinheit (4) mit einem Datenbus (6) zur Weiterleitung der Daten die Fahrerassistenzsysteme (7) verbunden ist.

7. Vorrichtung nach Anspruch 5 oder 6, **dadurch gekennzeichnet, dass** die Datenverarbeitungseinheit (4) ausgebildet ist, zusätzlich von zumindest einem weiteren Sensor (5) erfasste Information zu empfangen und weiterzuleiten.
